# EUROPEAN PATENT APPLICATION

(11) **EP 4 394 197 A1**
(43) Date of publication of application: **03.07.2024**
(21) Application number: 22861589.4
(22) Date of filing: 05.08.2022
(51) Int. Cl.: F16C 29/04, A47B 88/487, F16C 29/00

(54) **SLIDING DEVICE**

(30) Priority: 23.08.2021 KR 20210111134
(71) Applicant: Segos Co., Ltd., Incheon 21696 (KR)
(72) Inventor: LEE, Doo Myun, Incheon 21341 (KR); KIM, Duc Hoi, Incheon 21930 (KR); KIM, Sai Ryun, Incheon 21562 (KR); LEE, Ro Hee, Incheon 21016 (KR); KIM, Byeol, Seoul 01705 (KR)
(74) Representative: Beck & Rössig European Patent Attorneys
(86) International application number: PCT/KR2022/011657
(87) International publication number: WO 2023/027378

(57) **Abstract**

An embodiment of the present invention provides a sliding device comprising: a first rail member of which one surface is open; a second rail member which slides on the first rail member and of which one surface is open; and one or more ball members which are disposed between the first rail member and the second rail member and are provided as seen on a cross-section, wherein the first rail member and the second rail member are arranged to be engaged with each other through the open surfaces.

## Description

### Technical Field

The present invention relates to a sliding device, and more specifically, to a sliding device with a two-stage rail structure and improved tilting stability under a load.

### [Background Art]

In general, drawer assemblies are installed in mounting structures such as refrigerators, dishwashers, ovens, drawers, etc. to allow objects to be drawn in and out.

A drawer assembly is provided with a sliding device so that a drawer can be easily drawn out from the mounting structure and returned to its original position. In addition, the sliding device is provided with a rolling means in the form of balls or rollers, and thus it can move more smoothly during sliding to improve user convenience.

Typically, a sliding device consists of a fixed rail fixed to a wall surface of the drawer installation space and one or more moving rails slidably installed with respect to the fixed rail. That is, such a sliding device for guiding a drawer includes, for example, a two-stage folding type and a three-stage folding type. In the case of the two-stage folding type, the fixed rail on a main body is fixed to an inner wall surface of a refrigerator or an inner surface of general furniture, and the moving rail on the drawer side is fixed to a receiving body. Therefore, the drawer can be easily slidably drawn in and out the moving rail with respect to the fixed rail.

However, in the case of the two-stage folding sliding device of the related art, when the receiving body is fixed to the moving rail and a heavy load is applied to the receiving body, the load causes the moving rail to tilt with respect to the fixed rail, and as a result, there is a problem in that the operability of the sliding device is degraded.

### Related Art Document

(Patent Document 1) U.S. Patent Publication No. 6132020 (October 17, 2000)

### Disclosure

### Technical Problem

The present invention is directed to providing a sliding device with a two-stage rail structure and improved tilting stability under a load.

### Technical Solution

An aspect of the present invention provides a sliding device including a first rail member having one open side surface, a second rail member configured to slidably move on the first rail member and having one open side surface, and ball members disposed between the first rail member and the second rail member and including one or more ball members on a cross section, wherein the first rail member and the second rail member are disposed to engage with each other through the open one side surfaces.

In the sliding device according to one embodiment of the present invention, the first rail member may have a first upper portion, a first side portion connected to the first upper portion, and a first lower portion connected to the first side portion, and the second rail member may have a second upper portion, a second side portion connected to the second upper portion and a second lower portion connected to the second side portion, wherein the first upper portion may be located between the second upper portion and the second lower portion, and the second lower portion is located between the first upper portion and the first lower portion.

In the sliding device according to one embodiment of the present invention, a first ball may be disposed between the first upper portion and the second upper portion, a second ball may be disposed between the first lower portion and the second lower portion, and an angle (θ) formed by the line (a) connecting centers of the first ball and the second ball and the first lower portion or the second upper portion may be an acute angle.

In the sliding device according to one embodiment of the present invention, at an end of the first upper portion, a first insertion portion on which the first ball is seated may be formed to be inserted into and disposed within the second rail member.

In the sliding device according to one embodiment of the present invention, a third ball may be disposed between an upper side of the second lower portion and a lower side of the first insertion portion.

In the sliding device according to one embodiment of the present invention, at an end of the second lower portion, a second insertion portion on which the second ball is seated may be formed to be inserted into and disposed within the first rail member.

In the sliding device according to one embodiment of the present invention, a fourth ball may be disposed between a lower side of the first upper portion and an upper side of the second insertion portion.

In the sliding device according to one embodiment of the present invention, the sliding device further may include a retainer disposed between the first rail member and the second rail member and having a plurality of ball gripping portions formed to be spaced apart from each other.

In the sliding device according to one embodiment of the present invention, the retainer may be formed in an "S" shape.

In the sliding device according to one embodiment of the present invention, a cross section of the retainer may be structured to be 180° rotationally symmetrical with respect to the center G.

In the sliding device according to one embodiment of the present invention, the first rail member and the second rail member may be disposed complementary to each other through the open one side surfaces.

In the sliding device according to one embodiment of the present invention, an outline of a cross section of the first insertion portion may be formed as a closed curve, the first insertion portion may be provided as a solid piece, and a first track groove on which the first ball is seated may be formed in an upper side of the first insertion portion.

In the sliding device according to one embodiment of the present invention, an outline of a cross section of the second insertion portion may be formed as a closed curve, the second insertion portion may be provided as a solid piece, and a second track groove on which the second ball is seated may be formed in a lower side of the second insertion portion.

### Advantageous Effects

According to embodiments of the present invention, a rail that stably supports a load and has a simple structure can be provided.

Also, when a torsional load acts on a sliding device due to the weight of a drawer and the weight of a receiving body, resistance to the torsional load can be improved.

Furthermore, with the simple structure of a two-stage rail, the overall size of a cross section of the structure can be minimized through efficient space utilization between rail members.

The effects of the present invention are not limited to the above-described effects, and should be understood to include all effects that can be inferred from the configuration of the invention described in the detailed description or claims of the present invention.

### Description of Drawings

FIG. 1 is a perspective view of a sliding device according to a first embodiment of the present invention.
FIG. 2 is an exploded perspective view of the sliding device according to the first embodiment of the present invention.
FIG. 3 is a cross-sectional view of the sliding device according to the first embodiment of the present invention.
FIG. 4 is a perspective view of a first rail member according to the first embodiment of the present invention.
FIG. 5 is a perspective view of a second rail member according to the first embodiment of the present invention.
FIG. 6 shows a perspective view and a front view of a 3-ball type sliding device according to one embodiment of the present invention.
FIG. 7 is a perspective view of a retainer according to the first embodiment of the present invention.
FIG. 8 is a cross-sectional view of a sliding device according to a second embodiment of the present invention.
FIG. 9 is a cross-sectional view of a sliding device according to a third embodiment of the present invention.
FIG. 10 is a cross-sectional view of a sliding device according to a fourth embodiment of the present invention.
FIG. 11 is a cross-sectional view of a sliding device according to a fifth embodiment of the present invention.
FIG. 12 is a cross-sectional view of a sliding device according to a sixth embodiment of the present invention.

### Modes of the Invention

Hereinafter, the present invention will be described with reference to the attached drawings. However, the present invention may be implemented in various different forms and therefore, is not limited to the embodiments described herein. In order to clearly describe the present invention in the drawings, parts not related to the description are omitted, and similar parts are given similar reference numerals throughout the specification.

Throughout the specification, when a first part is "connected" to a second part, this includes not only cases where the first and second parts are "directly connected," but also cases where the first and second parts are "indirectly connected" with another member therebetween. In addition, when a part "includes" a component, this means that other components may be provided, rather than excluding other components, unless otherwise stated.

Throughout the specification, terms indicating direction such as "top," "side," and "bottom" are only used to describe the relative positional relationship between components represented in the drawings, and do not limit the absolute positions of the components.

Hereinafter, embodiments of the present invention will be described with reference to the attached drawings.

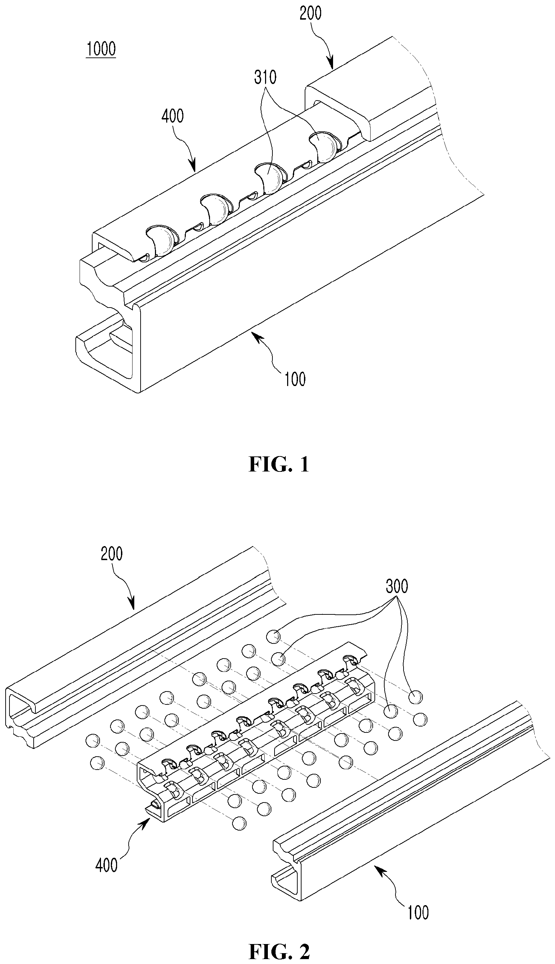

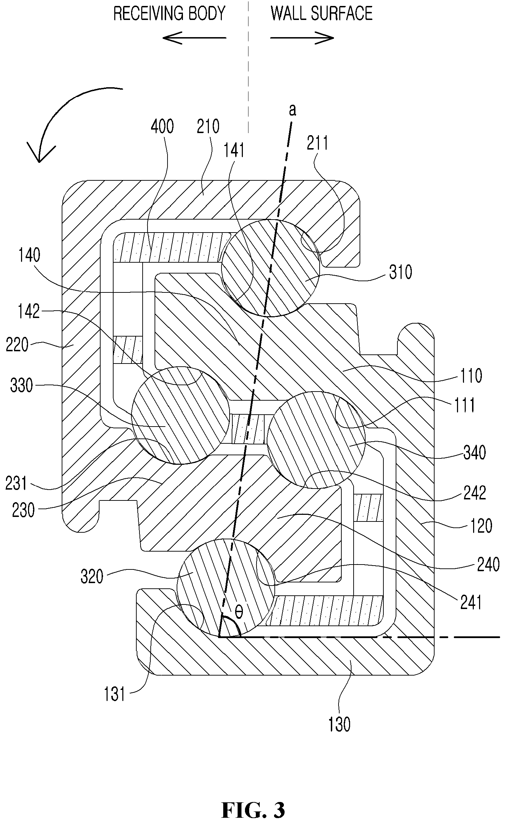

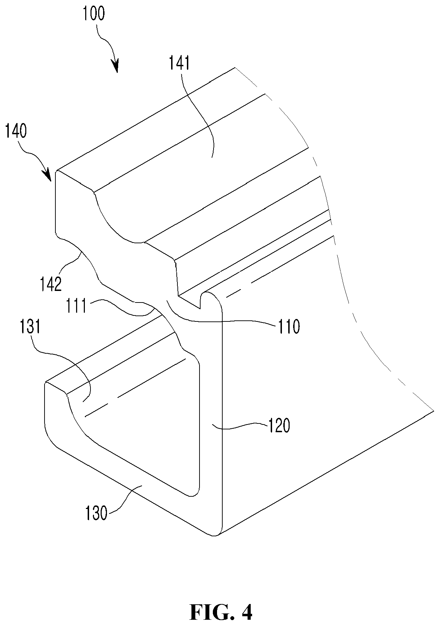

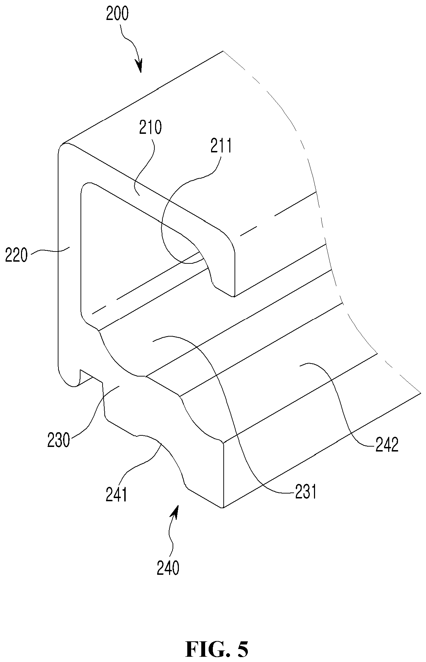

FIG. 1 is a perspective view of a sliding device according to a first embodiment of the present invention, FIG. 2 is an exploded perspective view of the sliding device according to the first embodiment of the present invention, FIG. 3 is a cross-sectional view of the sliding device according to the first embodiment of the present invention, FIG. 4 is a perspective view of a first rail member according to the first embodiment of the present invention, and FIG. 5 is a perspective view of a second rail member according to the first embodiment of the present invention.

Referring to FIGS. 1 to 5, the sliding device 1000 of the present invention includes a first rail member 100, a second rail member 200, a ball member 300, and a retainer 400.

More specifically, the sliding device 1000 includes a first rail member 100 fixed to the side wall of a mounting structure such as a drawer, a dishwasher, a refrigerator, or the like, and a second rail member 200 provided to be slidably move on the first rail member 100. Accordingly, the sliding device 1000 is formed in a structure in which an object is drawn in and out while slidably moving the second rail member 200 to one side or the other side according to the user's needs.

Meanwhile, the first rail member 100 and the second rail member 200 may be made of an aluminum (Al) material, thereby enabling the sliding device 1000 to be lightweight, and various colors may be applied through post-processing.

Furthermore, the sliding device 1000 is configured so that rolling means such as ball members 300 are installed between the first rail member 100 and the second rail member 200 to reduce the frictional force between the rails. Thereby, the sliding device 1000 enables smoother siding movement.

The first rail member 100 is a member fixed to a side wall of a mounting structure such as a drawer, a dishwasher, a refrigerator, or the like and has three surfaces and is configured such that one side surface is open. The first rail member 100 may be formed in an approximate "⊂" shape.

The second rail member 200 is a sliding moving member on the first rail member, has three surfaces, and is configured such that one side surface is open. The second rail member 200 may be formed in an approximate "⊂" shape.

The first rail member 100 and the second rail member 200 are complementarily arranged to engage with each other through the open one side surface. In this case, the first rail member 100 and the second rail member 200 may have cross-sections that are symmetrical to each other in a diagonal direction.

The ball member 300 is disposed between the first rail member 100 and the second rail member 200 and may be provided as one or more pieces on a cross section. Each of the ball members 300 may be made of different materials depending on where the ball members 300 are disposed.

The first rail member 100 includes a first upper portion 110, a first side portion 120 connected to the first upper portion 100, and a first lower portion 130 connected to the first side portion 120.

Similarly, the second rail member 200 includes a second upper portion 210, a second side portion 220 connected to the second upper portion 210, and a second lower portion 230 connected to the second side portion 220.

In this case, the first upper portion 110 may be located between the second upper portion 210 and the second lower portion 230, and the second lower portion 230 may be located between the first upper portion 110 and the first lower portion 130.

In this way, the first rail member 100 and the second rail member 200 are disposed to engage with each other so as to be mutually constrained.

Referring to FIG. 3, a first ball 310 is disposed between the first upper portion 110 and the second upper portion 210, and a second ball 320 is disposed between the first lower portion 130 and the second lower portion 230.

At the end of the first lower portion 130, an inwardly bent first reinforcement portion 131 is formed to form a second raceway, which may prevent the second ball 320 from being separated.

In addition, at the end of the second upper portion 210, an inwardly bent second reinforcement portion 211 is formed to form a first raceway, which may prevent the first ball 310 from being separated.

In this case, a line a connecting the centers of the first ball 310 and the second ball 320 may be provided to be inclined at a predetermined angle with respect to the first lower portion 130 or the second upper portion 210 of the first rail member 100.

More specifically, an angle θ formed by the line a connecting the centers of the first ball 310 and the second ball 320 and the first lower portion 130 or the second upper portion 210 may be an acute angle, a right angle, or an obtuse angle.

Preferably, the angle θ formed by the line a connecting the centers of the first ball 310 and the second ball 320 and the first lower portion 130 or the second upper portion 210 may be an acute angle. This is for increasing resistance to a torsional load applied to the sliding device 1000 by a weight of a drawer body and a weight of a stored object.

That is, it is possible to provide a sliding device 1000 with high resistance to vertical and torsional loads caused by the drawer body and the receiving object fixed to the second rail member 200 by forming the angle θ as an acute angle.

Meanwhile, at an end of the first upper portion 110 of the first rail member 100, a first insertion portion 140 that is inserted into the second rail member 200 and on which the first ball 310 is seated may be formed.

More specifically, the outline of a cross section of the first insertion portion 140 may be formed as a closed curve, the first insertion portion 140 may be provided as a solid piece, and a first track groove 141 on which the first ball 310 is seated may be formed in an upper side of the first insertion portion 140.

That is, the first insertion portion 140 may be formed to have a thicker cross-sectional shape than the first upper portion 110, the first side portion 120, and the first lower portion 130, thereby making it easier to support a load applied to the sliding device 1000.

Similarly, at an end of the second lower portion 230 of the second rail member 200, a second insertion portion 240 that is inserted into the first rail member 100 and on which the second ball 320 is seated may be formed.

More specifically, the outline of a cross section of the second insertion portion 240 may be formed as a closed curve, the second insertion portion 240 may be provided as a solid piece, and a second track groove 241 on which the second ball 320 is seated may be formed in a lower side of the second insertion portion 240.

That is, the second insertion portion 240 may be formed to have a thicker cross-sectional shape than the second upper portion 210, the second side portion 220, and the second lower portion 230, thereby making it easier to support a load applied to the sliding device 1000.

In this way, as the first insertion portion 140 and the second insertion portion 240 are formed in the first rail member 100 and the second rail member 200, respectively, the ball member 300 may more stably perform a rolling motion between the first rail member 100 and the second rail member 200.

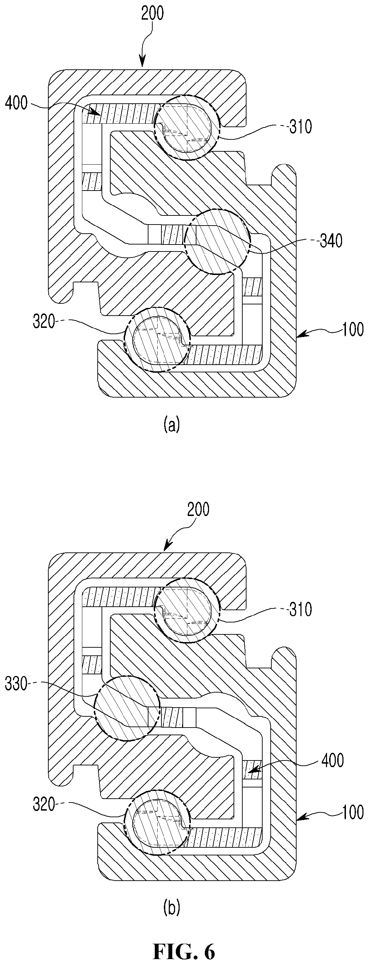

FIG. 6 is a cross-sectional view of a 3-ball type sliding device according to the first embodiment of the present invention.

Referring to FIGS. 3 and 6, a third raceway may be formed between a third track groove 231 formed in an upper side of the second lower portion 230 and a fourth track groove 142 formed in a lower side of the first insertion portion 140, and a third ball 330 may be disposed in the third raceway.

Furthermore, a fourth raceway is formed between a fifth track groove 242 formed in an upper side of the second insertion portion 240 and a sixth track groove 111 formed in a lower side of the first upper portion 110, and a fourth ball 340 may be disposed in the fourth raceway.

In this case, any one of the third ball 330 and the fourth ball 340 may be omitted. In this way, the sliding device 1000 may be used as a 3-ball type or 4-ball type as needed.

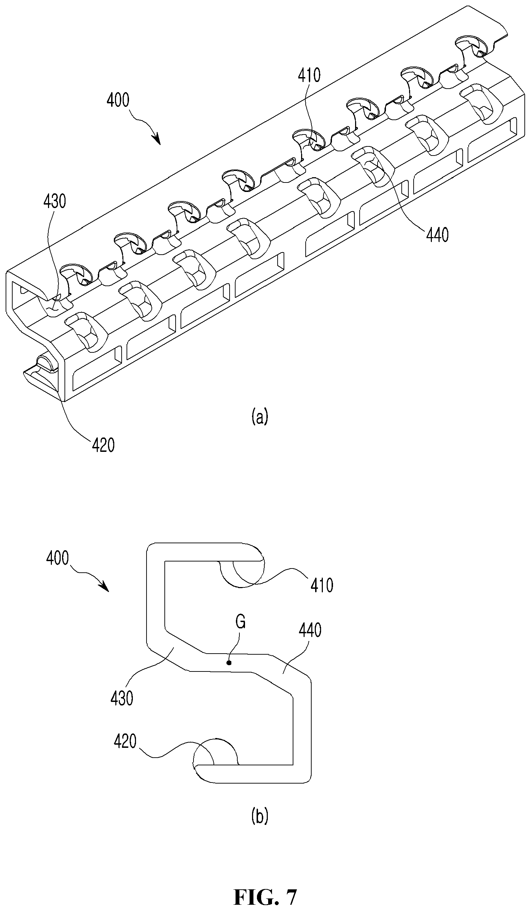

FIG. 7 is a perspective view of a retainer according to the first embodiment of the present invention.

Referring to FIG. 7, the sliding device 1000 may further include a retainer 400 disposed between the first rail member 100 and the second rail member 200. In this case, the retainer 400 may be formed in an approximate "S" shape.

The retainer 400 includes ball gripping portions into which the ball members 300 are inserted. The ball gripping portions may include a first gripping portion 410 into which the first ball is inserted, a second gripping portion 420 into which the second ball is inserted, a third gripping portion 430 into which the third ball is inserted, and a fourth gripping portion 440 into which the fourth ball is inserted. A plurality of ball gripping portions 410, 420, 430, and 440 may be spaced apart from each other in the longitudinal direction of the retainer 400.

The retainer 400 functions to hold the ball members 300 moving along the raceways of the first rail member 100 and the second rail member 200 so as to move the ball members 300 in a rolling motion.

The retainer 400 may have a cross-section that is structured to be 180° rotationally symmetrical with respect to the center G.

At the front and rear of the first rail member 100 and the second rail member 200, stoppers, for example, protrusions protruding inward from the rail, may be formed to prevent the retainer 400 from separating from the sliding device 1000. The formation of such stoppers is naturally necessary for the smooth operation of the slide, and since one skilled in the art will be able to place a stopper having an appropriate shape at an appropriate location, the illustration is omitted for convenience in the drawings explaining the present invention.

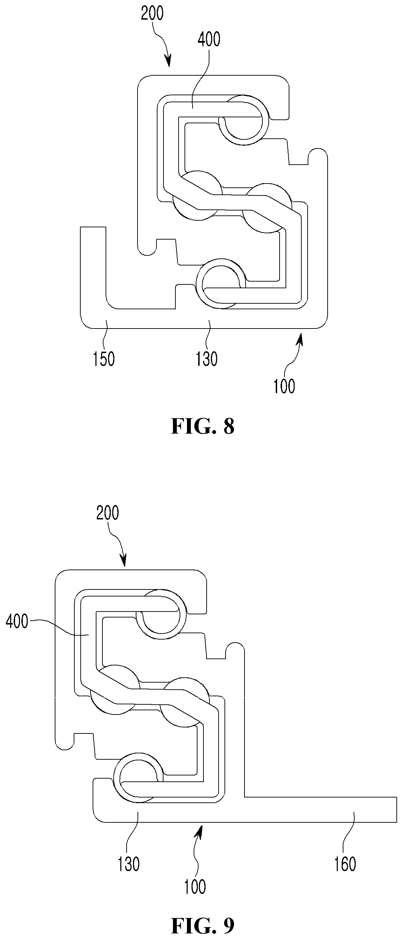

FIG. 8 is a cross-sectional view of a sliding device according to a second embodiment of the present invention.

FIG. 8 shows the second embodiment of the sliding device according to the present invention, where the same reference numbers indicate the same members as in the sliding device 1000 described above.

Meanwhile, the first rail member 100 of the sliding device 1000 is used as a fixed member fixed to a wall surface of a main body such as a desk, a cabinet, or the like, and the second rail member 200 is used as a movable member fixed to a receiving body or the like.

Referring to FIG. 8, the first rail member 100 may further include a first fixing portion 150 which extends from the first lower portion 130 in a direction toward the receiving object and has an approximate "L" shape. That is, the first fixing portion 150 may be further formed outside the first rail member 100 depending on the fastening method and locations of the first rail member 100 and the side wall of the main body.

FIG. 9 is a cross-sectional view of a sliding device according to a third embodiment of the present invention.

FIG. 9 shows the third embodiment of the sliding device according to the present invention, where the same reference numbers indicate the same members as in the sliding device 1000 described above.

Meanwhile, the first rail member 100 of the sliding device 1000 is used as a fixed member fixed to a wall surface of a main body such as a desk, a cabinet, or the like, and the second rail member 200 is used as a movable member fixed to a receiving body or the like.

Referring to FIG. 9, the first rail member 100 may further include a second fixing portion 160 extending from the first lower portion 130 in a direction toward the wall surface. That is, the second fixing portion 160 may be further formed outside the first rail member 100 depending on the fastening method and locations of the first rail member 100 and the side wall of the main body.

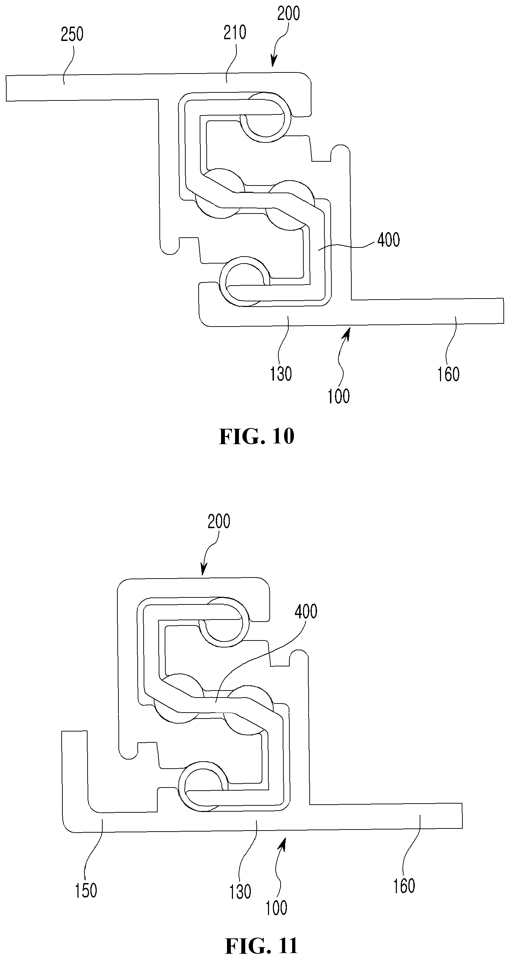

FIG. 10 is a cross-sectional view of a sliding device according to a fourth embodiment of the present invention.

FIG. 10 shows the fourth embodiment of the sliding device according to the present invention, where the same reference numbers indicate the same members as in the sliding device 1000 described above.

Meanwhile, the first rail member 100 of the sliding device 1000 is used as a fixed member fixed to a wall surface of a main body such as a desk, a cabinet, or the like, and the second rail member 200 is used as a movable member fixed to a receiving body or the like.

Referring to FIG. 10, the first rail member 100 may further include a second fixing portion 160 extending from the first lower portion 130 in the direction toward the wall surface, and the second rail member 200 may further include a third fixing portion 250 extending from the second upper portion 210 in the direction toward the receiving body. That is, the second fixing portion 160 may be further formed outside the first rail member 100 depending on the fastening method and locations of the first rail member 100 and the side wall of the main body, and the third fixing portion 250 may be further formed outside the second rail member 200 depending on the fastening method and locations of the second rail member 200 and the receiving body.

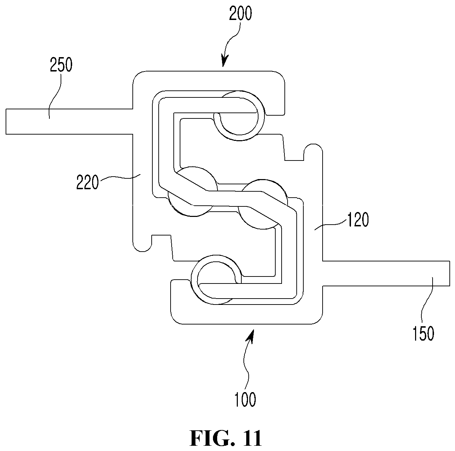

FIG. 11 is a cross-sectional view of a sliding device according to a fifth embodiment of the present invention.

FIG. 11 shows the fifth embodiment of the sliding device according to the present invention, where the same reference numbers indicate the same members as in the sliding device 1000 described above.

Meanwhile, the first rail member 100 of the sliding device 1000 is used as a fixed member fixed to a wall surface of a main body such as a desk, a cabinet, or the like, and the second rail member 200 is used as a movable member fixed to a receiving body or the like.

Referring to FIG. 11, the first rail member 100 may further include a first fixing portion 150 which extends from the first lower portion 130 in the direction toward the receiving body and has an approximate "L" shape and a second fixing portion 160 extending from the first lower portion 130 in the direction toward the wall surface. That is, the first fixing portion 150 and the second fixing portion 160 may be further formed outside the first rail member 100 depending on the fastening method and locations of the first rail member 100 and the side wall of the main body.

FIG. 12 is a cross-sectional view of a sliding device according to a sixth embodiment of the present invention.

FIG. 12 shows the sixth embodiment of the sliding device according to the present invention, where the same reference numbers indicate the same members as in the sliding device 1000 described above.

Meanwhile, the first rail member 100 of the sliding device 1000 is used as a fixed member fixed to a wall surface of a main body such as a desk, a cabinet, or the like, and the second rail member 200 is used as a movable member fixed to a receiving body or the like.

Referring to FIG. 12, the first rail member 100 may further include a second fixing portion 160 extending from the first side portion 120 in the direction toward the wall surface, and the second rail member 200 may further include a third fixing portion 250 extending from the second side portion 220 in the direction toward the receiving body. That is, the second fixing portion 160 may be further formed outside the first rail member 100 depending on the fastening method and locations of the first rail member 100 and the side wall of the main body, and the third fixing portion 250 may be further formed outside the second rail member 200 depending on the fastening method and locations of the second rail member 200 and the receiving body.

The above description of the present invention is for illustrative purposes only, and one having ordinary skill in the technical field to which the invention belongs will understand that the present invention can be easily modified into other specific forms without changing the technical idea or essential features of the present invention. Therefore, it should be understood that the above-described embodiments are exemplary in all respects and not restrictive. For example, each component described as a single type may be distributed and implemented, and similarly, components described as distributed may also be implemented in a combined form.

The scope of the present invention is indicated by the claims described below, and the meaning and scope of the claims and all changes or modified forms derived from the equivalent concepts thereof should be construed as being included in the scope of the present invention.

### Description of reference numerals

1000 SLIDING DEVICE
100 FIRST RAIL MEMBER
110 FIRST UPPER PORTION
120 FIRST SIDE PORTION
130 FIRST LOWER PORTION
140 FIRST INSERTION PORTION
150 FIRST FIXING PORTION
160 SECOND FIXING PORTION
200 SECOND RAIL MEMBER
210 SECOND UPPER PORTION
220 SECOND SIDE PORTION
230 SECOND LOWER PORTION
240 SECOND INSERTION PORTION
250 THIRD FIXING PORTION
300 THIRD BALL MEMBER
310 FIRST BALL
320 SECOND BALL
330 THIRD BALL
340 FOURTH BALL
400 RETAINER
410 FIRST GRIPPING PORTION
420 SECOND GRIPPING PORTION
430 THIRD GRIPPING PORTION
440 FOURTH GRIPPING PORTION

## Claims

1. A sliding device comprising:
a first rail member having one open side surface;
a second rail member configured to slidably move on the first rail member and having one open side surface; and
ball members disposed between the first rail member and the second rail member and including one or more ball members on a cross section,
wherein the first rail member and the second rail member are disposed to engage with each other through the open one side surfaces.

2. The sliding device of claim 1, wherein the first rail member has a first upper portion, a first side portion connected to the first upper portion, and a first lower portion connected to the first side portion, and
the second rail member has a second upper portion, a second side portion connected to the second upper portion, and a second lower portion connected to the second side portion,
wherein the first upper portion is located between the second upper portion and the second lower portion, and the second lower portion is located between the first upper portion and the first lower portion.

3. The sliding device of claim 2, wherein a first ball is disposed between the first upper portion and the second upper portion,
a second ball is disposed between the first lower portion and the second lower portion, and
an angle (θ) formed by a line (a) connecting centers of the first ball and the second ball and the first lower portion or the second upper portion is an acute angle.

4. The sliding device of claim 3, wherein, at an end of the first upper portion, a first insertion portion on which the first ball is seated is formed to be inserted into and disposed within the second rail member.

5. The sliding device of claim 4, wherein a third ball is disposed between an upper side of the second lower portion and a lower side of the first insertion portion.

6. The sliding device of claim 3, wherein at an end of the second lower portion, a second insertion portion on which the second ball is seated is formed to be inserted into and disposed within the first rail member.

7. The sliding device of claim 6, wherein a fourth ball is disposed between a lower side of the first upper portion and an upper side of the second insertion portion.

8. The sliding device of claim 1, further comprising a retainer disposed between the first rail member and the second rail member and having a plurality of ball gripping portions formed to be spaced apart from each other.

9. The sliding device of claim 8, wherein the retainer is formed in an "S" shape.

10. The sliding device of claim 9, wherein a cross section of the retainer is structured to be 180° rotationally symmetrical with respect to the center (G).

11. The sliding device of claim 1, wherein the first rail member and the second rail member are disposed complementary to each other through the open one side surfaces.

12. The sliding device of claim 4, wherein an outline of a cross section of the first insertion portion is formed as a closed curve, the first insertion portion is provided as a solid piece, and a first track groove on which the first ball is seated is formed in an upper side of the first insertion portion.

13. The sliding device of claim 6, wherein an outline of a cross section of the second insertion portion is formed as a closed curve, the second insertion portion is provided as a solid piece, and a second track groove on which the second ball is seated is formed in a lower side of the second insertion portion.
